## Europäisches Patentamt

## European Patent Office

## Office européen des brevets

(11) Veröffentlichungsnummer : **0 508 110 B1**

(12)

# EUROPÄISCHE PATENTSCHRIFT

(45) Veröffentlichungstag der Patentschrift :
**01.03.95 Patentblatt 95/09**

(51) Int. Cl.[6] : **H02P 5/40,** H02M 1/088,
H02M 1/084, B60L 9/30

(21) Anmeldenummer : **92103838.6**

(22) Anmeldetag : **06.03.92**

(54) **Verfahren zur Steuerung elektrischer Ventile eines Stromrichters.**

(30) Priorität : **08.04.91 DE 4111226**

(43) Veröffentlichungstag der Anmeldung :
**14.10.92 Patentblatt 92/42**

(45) Bekanntmachung des Hinweises auf die
Patenterteilung :
**01.03.95 Patentblatt 95/09**

(84) Benannte Vertragsstaaten :
**AT BE CH DE DK ES FR GB IT LI LU NL SE**

(56) Entgegenhaltungen :
**3RD EUROPEAN CONFERENCE ON POWER
ELECTRONICS AND APPLICATIONS, Bd. 1,
9.Oktober1989, AACHEN, Seiten 417 - 420; F.
BAUER und H.D. HEINING: 'QUICKRESPONSE
SPACE VECTOR CONTROL FOR A HIGH PO-
WER THREE-LEVEL-INVERTER DRIVESY-
STEM'**

(56) Entgegenhaltungen :
**IECON 90 16TH ANNUAL CONFERENCE OF
IEEE INDUSTRIAL ELECTRONICS SOCIETY,
Bd. II,27. November 1990, PACIFIC GROVE,
CALIFORNIA, Seiten 996 - 1001 ,
XP216840;JOHN K. PEDERSEN und PAUL
THEGERSEN: 'FULLY DIGITAL-CONTROLLED
PWM INVERTERWITH SOFTWARE BASED
MODULATION FOR AC MACHINE CONTROL'
ELEKTRISCHE BAHNEN, Bd. 89, Nr. 3, März
1991, MUNCHEN, DE, Seiten 79 - 87,XP200273;
MICHAEL JAENECKE ET AL.: 'Direkte Selbstregelung, ein neuartigesRegelverfahren für
Traktionsantriebe im Ersteinsatz bei dieselelektrischenLokomotiven'**

(73) Patentinhaber : **ASEA BROWN BOVERI AG**
**Haselstrasse 16**
**CH-5401 Baden (CH)**

(72) Erfinder : **Skarpetowski, Grzegorz, Dr.**
**Birkenweg 8**
**CH-5300 Turgi (CH)**

## Beschreibung

TECHNISCHES GEBIET

Bei der Erfindung wird ausgegangen von einem Verfahren zur Steuerung elektrischer Ventile eines Stromrichters nach dem Oberbegriff des Patentanspruchs 1.

STAND DER TECHNIK

Mit dem Oberbegriff nimmt die Erfindung auf einen Stand der Technik Bezug, wie er durch F. Bauer und H.-D. Heining, QUICK RESPONSE SPACE VECTOR CONTROL FOR A HIGH POWER THREE-LEVEL-INVERTER DRIVE SYSTEM, 3rd European Conference on Power Electronics and Applications, EPE Aachen, 9. - 12. Okt. 1989, Vol. 1, S. 417 - 420, bekannt ist. Dort wird ein Flussrechner zur feldorientierten Regelung einer stromrichtergespeisten Induktionsmaschine eingesetzt. GTO-Thyristoren eines 3-Niveau-Wechselrichters werden mittels Pulsbreitenmodulation gesteuert. Sowohl die feldorientierte Regelung als auch die Erzeugung der Impulsmuster sind in einem digitalen Signalprozessor implementiert. Dabei ist für jeden Stromrichtertyp ein spezielles Steuerprogramm oder eine spezielle Steuerschaltung erforderlich.

DARSTELLUNG DER ERFINDUNG

Die Erfindung, wie sie im Patentanspruch 1 definiert ist, löst die Aufgabe, ein Verfahren zur Steuerung elektrischer Ventile eines Stromrichters der eingangs genannten Art derart weiterzuentwickeln, dass unterschiedliche Typen von Stromrichtern nach einem allgemeinen Algorithmus steuerbar sind.

Ein Vorteil der Erfindung besteht darin, dass ein universeller Algorithmus zur Erzeugung der Ventil- bzw. Thyristorbefehle für mehrstufige und mehrphasige netz- und zwangskommutierte Stromrichter zur Verfügung steht. Die Steuerung braucht nicht für jeden Stromrichtertyp neu programmiert zu werden. Der Steueralgorithmus kann als Hard- oder Software realisiert sein.

Die Vielfalt der Stromrichter-Pulsmodulatoren auf dem Gebiet der Leistungselektronik kann auf 1 - 3 Typen begrenzt werden. Dadurch lassen sich Entwicklungskosten insbesondere bei kleinen Stückzahlen und exotischen Einzellösungen einsparen.

KURZE BESCHREIBUNG DER ZEICHNUNGEN

Die Erfindung wird nachstehend anhand von Ausführungsbeispielen erläutert. Es zeigen:

Fig. 1 ein Blockschaltbild eines von einem Stromrichter gespeisten Verbrauchers bzw. Prozesses mit einem erfindungsgemässen Leitsignalgenerator zur Erzeugung von Leitsignalen für den Stromrichter,

Fig. 2 ein Blockschaltbild eines Leitsignalgenerators für einen 3Phasen-Stromrichter mit 3 Ventilketten,

Fig. 3 a) - f) Stromrichterschaltungen mit nur einer Thyristorkette,

Fig. 4 a) - e) Stromrichterschaltungen mit 2 Thyristorketten,

Fig. 5 a) - c) Stromrichterschaltungen mit 3 Thyristorketten,

Fig. 6 eine Ventilkettenmatrix für einen mehrphasigen Mehrpunkt-Stromrichter,

Fig. 7 ein Blockschaltbild eines Leitsignalgenerators für einen 3Kreis-4Quadrantensteller und

Fig. 8 ein Hilfsspannungsnetz für den Taktungsalgorithmus.

WEGE ZUR AUSFÜHRUNG DER ERFINDUNG

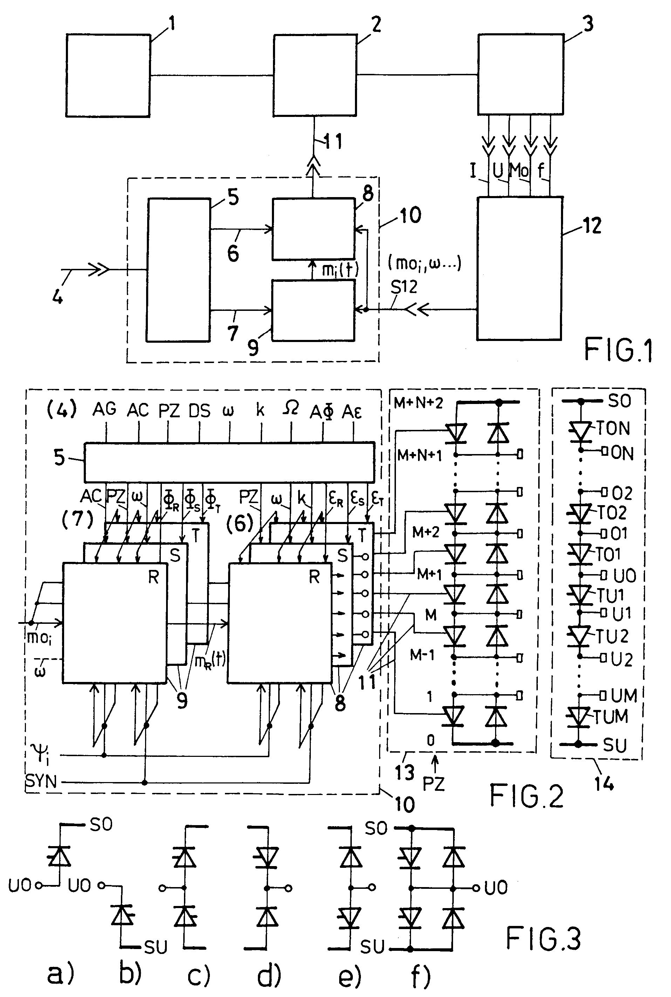

In Fig. 1 ist mit (1) eine Energiequelle bzw. eine Wechselspannungs- oder Gleichspannungsquelle bezeichnet, aus der über steuerbare elektrische Ventile bzw. einen Wechselrichter bzw. Stromrichter (2) ein elektrischer Verbraucher bzw. eine Last oder eine elektrische Maschine oder ein Prozess (3) mit elektrischer Energie gespeist wird. Von dem Prozess (3) werden z. B. ein Wechselstromsignal (I), ein Wechselspannungssignal (U), ein Drehmomentsignal (Mo) sowie ein Frequenzsignal (f) detektiert und einem Regler (12) zugeführt. Dieser Regler (12) liefert ausgangsseitig Regelsignale (S12) an einen Pulser bzw. Impulsgenerator (8) und an einen Modulator (9) eines Leitsignalgenerators (10). Die Regelsignale (S12) können Modulationstiefeparametersignale ($m0_i$) und ein Kreisfrequenzsignal ($\omega$) der Wechselspannung (U) umfassen, wobei (i) eine Laufvariable für Wechselstromphasen (R, S, T) bezeichnet. Eingangsseitig erhält der Modulator (9) ferner Modulatorsteuersignale (7) von einem Programmierglied bzw. Setzer (5) des Leitsignalgenerators (10). Der Setzer (5) erhält eingangsseitig vorgebbare Setzsignale (4). Der Impulsgenerator (8) erhält vom Setzer (5) Impulsgeneratorsteuersignale (6) und vom Modulator (9) ein Signal, entsprechend einer Modulationsfunktion ($m_i(t)$); ausgangsseitig liefert er Zündsignale bzw. Leitsignale (11) an den Stromrichter (2). Die Leitsignale (11) können mittels Glasfasern übertragene optische Signale sein oder mittels eines nicht dargestellten Verstärkers verstärkte elektrische Signale.

Der erfindungsgemässe Leitsignalgenerators (10) stellt das Glied des leistungselektronischen Systems dar, welches direkt vor dem Stromrichter (2) an der Schnittstelle zwischen einer Leitelektronik und dem Starkstromkreis geschaltet ist. Der Leitsignalgenerator (10) erhält Eingangsgrössen vom Regler (12) bzw. von dem Teil der Elektronik geliefert, der das Steuerverfahren des Stromrichters beinhaltet.

In Fig. 2 ist ein Leitsignalgenerator (10) für einen Stromrichter (2) mit 3 Phasen (R, S, T) dargestellt, der 3 bidirektionale, halbgesteuerte Ventilketten (13) mit Leitsignalen (11) ansteuert, wobei der Übersichtlichkeit halber nur eine von 3 Ventilketten zur Phase (T) dargestellt ist. Antiparallel zu jedem Thyristor der Ventilkette (13) ist eine Diode geschaltet. (M) bezeichnet die Anzahl von unteren Ventilklemmen (U1 ... UM) zwischen einer unteren Stromschiene (SU) und einer Nullklemme bzw. Ausgangsklemme (U0). (N) bezeichnet die Anzahl von oberen Ventilklemmen (O1 ... ON) zwischen einer oberen Stromschiene (SO) und der Nullklemme (U0). Mit PZ = 0, ... M - 1, M, M + 1, M + 2, ... M + N + 1, M + N + 2 ist die Punktzahl des Stromrichters (13) bezeichnet.

Anstelle der bidirektionalen, halbgesteuerten Ventilkette (13) kann z. B. auch eine unidirektionale, vollgesteuerte Ventilkette (14) mit einer Reihenschaltung von Thyristoren (TUM, ... TU2, TU1, TO1, TO2, ... TON) vorgesehen sein. Gleiche Bezeichnungen gelten für die Ventilkette (13) (nicht dargestellt).

Der Leitsignalgenerator (10) weist nur einen Setzer (5), aber je Phase (R, S, T) je einen Modulator (9) und je einen Impulsgenerator (8) auf.

Der Setzer (5), welcher die Programmierungsparameter des Leitsignalgenerators (10) beinhaltet, hat die Aufgabe, die von der hierarchisch übergeordneten Ebene einmal gesetzten Daten nach entsprechender Verarbeitung, welche auch nach einem Eigentest festgelegte Schaltungsdaten berücksichtigen muss, einem Modulator (9) oder einer Gruppe von Modulatoren (9) und Impulsgeneratoren (8) periodisch zur Verfügung zu stellen. Der Setzer (5) erhält als Setzsignale (4) folgende Signale:

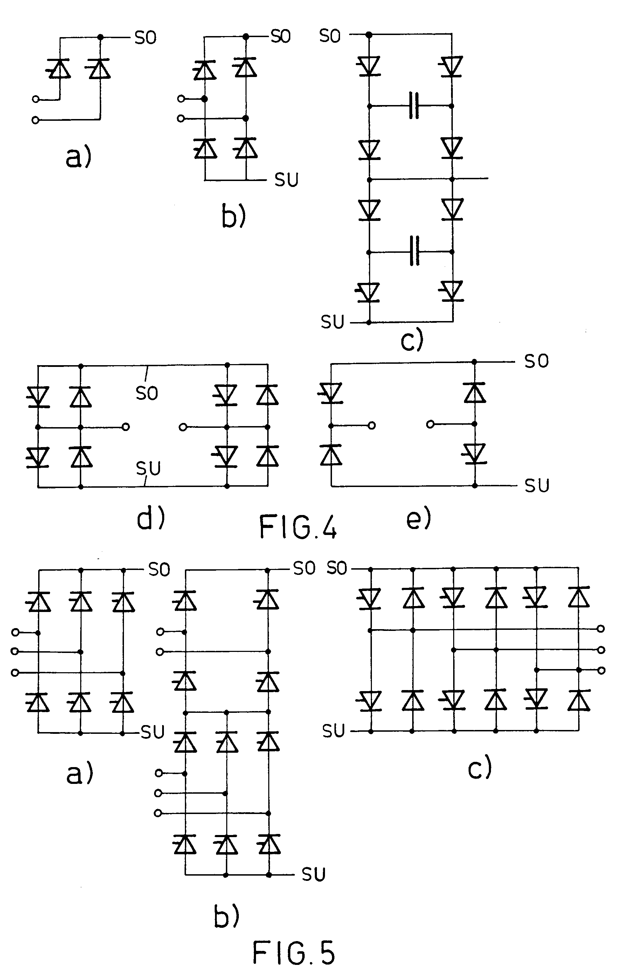

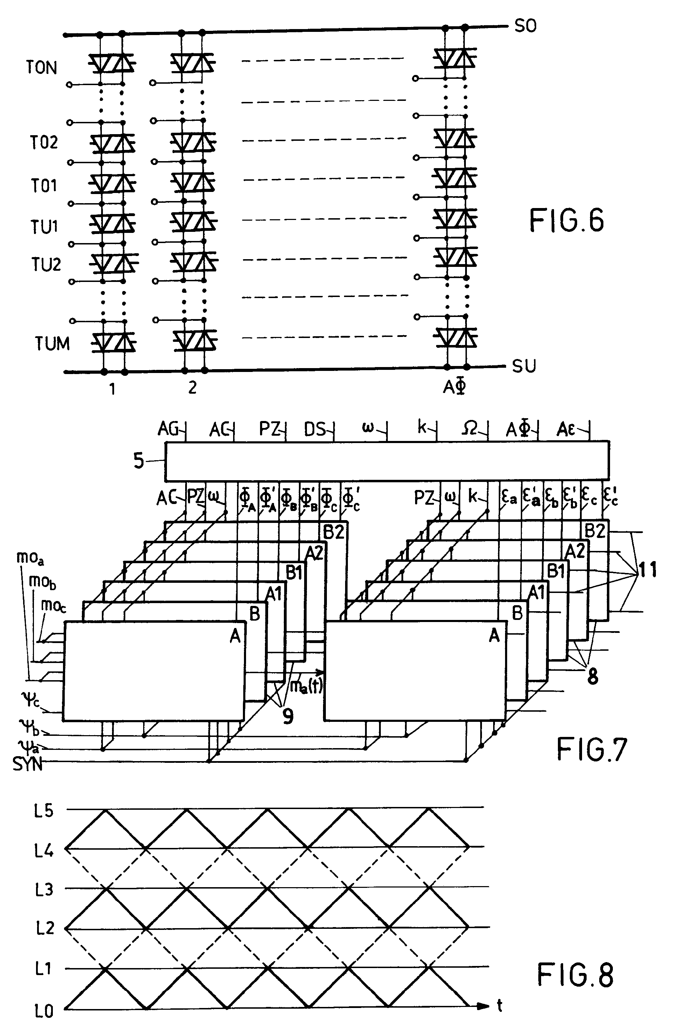

- AG = Anzahl Ventilketten (13, 14) mit gleicher Grundschwingungsphase,
- AC = Betriebsstromparameter, Kennzahl für Wechsel- oder Gleichstrombetrieb,
  AC = 1 bedeutet Wechselstrom/Wechselspannungsbetrieb,
  AC = 0 bedeutet Gleichstrom/Gleichspannungsbetrieb, wie z. B. bei einem 1Quadranten-Steller gemäss Fig. 3 d) und 3 e),
- PZ = Ventilkettenlängeparameter, Anzahl in Reihe geschalteter Thyristoren je Ventilkette,
  PZ = 2 = Zweipunktschaltung,
  PZ = 3 = Dreipunktschaltung,
  PZ = 4 = Vierpunktschaltung,
- DS = Parameter der doppelseitigen Lastspeisung,
  DS = 0 = einseitige Speisung z. B. eines Wechselrichters auf eine in Stern geschaltete Asynchronmaschine gemäss Fig. 5 c),
  DS = 1 = doppelseitige Speisung z. B. einer Transformatorwicklung bei einem Vierquadrantensteller gemäss Fig. 4 d),
- $\omega$ = Kreisfrequenz der Wechselspannung (U) = $2 \cdot \pi \cdot f$,
  f = Frequenz der Wechselspannung (U),
- k = Parameter der synchronen Taktung, Vielfachheit der Taktung,
- $\Omega$ = Kreisfrequenz der Taktung = $k \cdot \omega = 2 \cdot \pi \cdot f_t$ für AC = 1, $f_t$ = Taktfrequenz,
- $A\Phi$ = Anzahl Ventilketten mit Grundschwingungsverschiebung und
- $A\varepsilon$ = Anzahl unabhängiger, impulsmusterverschobener Ventilketten.

Der Modulator (9) erhält vom Setzer (5) als Modulatorsteuersignale (7) folgende Signale: AC, PZ, $\omega$ und
- $\Phi_R$, $\Phi_S$, $\Phi_T$ = Initialwinkellagen der Grundschwingung der Ventilketten (R, S, T). Verallgemeinert werden die Initialwinkellagen mit ($\Phi_i$) bezeichnet, wobei i = 1, 2 ... $A\Phi \cdot AG$ eine Laufvariable für Wechselstromphasen ist.

Der Impulsgenerator (8) erhält vom Setzer (5) als Impulsgeneratorsteuersignale (6) folgende Signale: PZ, $\omega$, k und
- $\varepsilon_R$, $\varepsilon_S$, $\varepsilon_T$ = Initialwerte der Impulsmusterwinkellage bezüglich der impulsmusterverschobenen Ketten. Verallgemeinert werden die Initialwerte der Impulsmusterwinkellage mit ($\varepsilon_j$) bezeichnet, wobei j = 1, 2, ... $A\varepsilon \cdot A\Phi$ eine Laufvariable für Impulsmuster bezeichnet.

Das Kreisfrequenzsignal ($\omega$) für den Impulsgenerator (8) und den Modulator (9) kann bei einem Wechselrichter (2) auch vom Regler (12) kommen. Der Impulsgenerator (8) und der Modulator (9) erhalten vom Regler (12) mit den Regelsignalen (S12) je ein Synchronisationssignal (SYN) und ein Regler-Korrekturwinkelsignal ($\psi_i$), entsprechend einer Regler-Grundschwingungswinkellage. Bei vektoriellen Reglern (12) kann auch nur ein

Modulationstiefeparameter ($m0_i$) und ein Regler-Korrekturwinkelsignal ($\psi_i$) ausgegeben werden. Der Modulator (9) bekommt vom Regler (12) Modulationstiefeparameter ($m0_i$) und ggf. das Kreisfrequenzsignal ($\omega$).

Der Modulator (9) hat die Aufgabe, die Modulationsfunktion ($m_i(t)$) aus einer minimalen Anzahl von Daten zu erzeugen. Sehr viele, aber nicht alle Fälle, können mit einer allgemeinen analytischen Darstellung erfasst werden. Für einfache Netzstromrichter oder solche spezielle Modulationsfunktionen ($m_i(t)$), die z. B. bei der direkten Selbstregelung vorkommen, müssen speziell angepasste Gleichungen eingesetzt werden. Die Modulationsfunktion ($m_i(t)$) entscheidet über das Aussehen der Pulsreihe, die durch den Impulsgenerator (8) erzeugt wird.

Eine recht allgemeine Form des Modulators (9) berechnet die zeitabhängige Modulationsfunktion:

$$m_i(t) = (PZ - 1) \cdot \{AC + m0_i \cdot \cos (AC \cdot (\omega \cdot t - (\Phi_i + \psi_i)))\}/(AC + 1),$$

wobei t die Zeit, der Index i eine Laufvariable zur Kennzeichnung der Wechselstromphase (R, S, T), $m0_i$ einen Parameter der Modulationstiefe, $\Phi_i$ die Initialwinkellage und $\psi_i$ einen Regler-Korrekturwinkel einer i. Ventilkettenschaltung, i = 1, 2, ... $A\Phi$ bezeichnen.

Die Modulationsfunktion ($m_i(t)$) gibt die Amplitude, Frequenz und die Phase der durch den Stromrichter (2) zu erzeugenden Grösse (Strom/Spannung) vor.

Der Impulsgenerator (8) erzeugt aus seinen Eingangsdaten eine zeitabhängige Mehrniveaufunktion bzw. Distribution oder Kommutierungsfunktion $KF_{ij}(t)$ gemäss der Gleichung:

$$KF_{ij}(t) = m_i(t) + (2/\pi) \cdot \sum_{n=1}^{n1} \{\sin (n \cdot \pi \cdot m_i(t)) \cdot$$

$$\cos (n \cdot k \cdot (\omega \cdot t - (\varepsilon_j + \Phi_i + \psi_i)))\}/n,$$

wobei n eine Laufvariable, n1 eine Genauigkeitskennzahl und $\varepsilon_j$ den Initialwert der J. Impulsmusterlage von Ventilkettenschaltungen mit dem gleichen Index i, bezeichnen. Das Initialwinkelsignal ($\Phi_i$) kann dem Impulsgenerator (8) über den Modulator (9) oder direkt vom Setzer (5) übertragen werden (nicht dargestellt).

Die Genauigkeit der Berechnung nimmt mit der Anzahl der Terme der Summe zu. n1 wird vorzugsweise im Bereich zwischen 20 und 100 gewählt.

Die Ausgangssignale (11) des Impulsgenerators (8) entsprechen den Leitbefehlen der Thyristoren (TUM ... TON); sie werden mit Hilfe von PZ Komparatoren zur Realisierung der weiter unten angegebenen Heaviside-Funktion H(x) aus der Kommutierungsfunktion $KF_{ij}(t)$ gewonnen. Im Impulsgenerator (8) oder in einer zusätzlichen, nicht dargestellten Einrichtung können Massnahmen zur Fehlerüberwachung und zur Verhinderung von Kurzschlüssen vorgesehen sein.

Der Leitsignalgenerator (10) kann in Hard- oder Software realisiert sein. Mit ihm lassen sich Stromrichter (2) mit Ventilketten (13, 14) beliebiger Länge ansteuern. Als Kettenlängeparameter ist die Anzahl der Stufen bzw. die Punktzahl PZ vorgesehen.

Die Fig. 3 - 5 zeigen Anwendungsbeispiele für den erfindungsgemässen Algorithmus, wobei die Bezeichnungen mit denen der Ventilkette (14) übereinstimmen. Dabei zeigt Fig. 3 Stromrichter (2), die nur aus einer Ventilkette oder aus einem Teil einer Ventilkette bestehen.

Die Fig. 3 a) - 3 c) zeigen 1phasige Stromrichter.

Fig. 3 d) zeigt einen 1Quadranten-Stromsteller,

Fig. 3 e) einen 1Quadranten-Spannungssteller und

Fig. 3 f) einen 2Quadranten-Steller.

Die Stromrichter (2) dieser Gruppe können also mit nur einem Baustein bzw. Modulator (9) und Impulsgenerator (8) angesteuert werden.

Bei den Stromrichtern (2) mit 2 Thyristorketten müssen 2 solche Software- oder Hardware-Bausteine eingesetzt werden. Dazu gehören folgende Stromrichter (2):

Fig. 4 a):    1phasige Mittelpunktschaltung,

Fig. 4 b):    1phasige Brückenschaltung mit allen Steuerungsarten, wie Anschnitt, Anschnitt und Abschnitt (Sektorsteuerung) und in vielen Ausführungen, wie z. B. als gleichstromseitige Folgeschaltung, die eine Art eines elektronischen Stufenschalters darstellt,

Fig. 4 c):    1phasige Schaltung nach dem Phasenfolgelöschprinzip,

Fig. 4 d):    Vierquadrantensteller (ein Kreis eines Vierquadrantenstellers oder ein Kreis eines Spannungs-Wechselrichters zum Anschluss einer Asynchronmaschine),

Fig. 4 e):    2Quadrantensteller zur Speisung eines Strom-Wechselrichters mit Spannungsumkehr am Gleichspannungsnetz.

4

3 Thyristorketten, die 3 Ansteuermodule benötigen, weisen z. B. folgende Stromrichter (2) auf:

Fig. 5 a): eine Drehstrombrücke, 1phasige wechselstromseitige Folgeschaltung,

Fig. 5 b): quasi 4stufige Schaltung,

Fig. 5 c): Spannungswechselrichter für eine Asynchronmaschine in Sternschaltung und

nicht dargestellt: ein 3phasiger stromeinprägender Stromrichter mit Phasenfolgelöschung.

Aus den Fig. 3 - 5 wird eine Logik sichtbar, die auf beliebig viele Ventilketten anwendbar ist.

Fig. 6 zeigt einen Stromrichter (2) in Matrixform für $A\Phi$ Phasen mit M + N in Reihe geschalteten Ventilen bzw. Thyristoren (TUM ... TON), der je Phase 2 Modulatoren (9) und 2 Impulsgeneratoren (8) benötigt. Für einen solchen Stromrichter ist der Ventilkettenlängeparameter PZ = M + N und die Anzahl Ventilketten AN = $(1 + DS) \cdot A\Phi \cdot AG \cdot A\varepsilon$.

Zur Auslöschung von Bändern der Taktfrequenzharmonischen wird eine Pulsmusterverschiebung eingesetzt. Diese Verschiebung erhöht scheinbar die resultierende Taktfrequenz ($f_t$) des Stromrichters (2).

Es ist allein eine Sache der Parameterprogrammierung, ob z. B. 6 Ketten eines Stromrichters als 3 taktversetzte, aber gleichphasige Eingangskreise eines 4Quadrantenstellers oder als 3 nicht taktversetzte, aber je um 120° verschobene 3 Phasen eines Wechselrichters oder als 6 2Quadrantensteller betrieben werden. Programmiert wird dabei entweder die Phasenverschiebung oder die Taktversetzung.

Die freie Programmierung und die mehrfach parallele Ausführung mancher Stromrichter (2), wie es z. B. an der Netzseite praktiziert wird, erlaubt es, nur durch das Setzen eines entsprechenden Parameters, auch bei einem Teilausfall der Anlage auf solche Pulsmusterverschiebungen automatisch überzugehen, bei denen das Stromnetz mit einem Minimum von Harmonischen belastet wird.

Bei dem in Fig. 2 dargestellten 3Phasenstromrichter (13, 14) müssen sowohl die Grundschwingungsphasenlagen wie auch die Pulsmusterphasenlagen getrennt programmiert werden.

Fig. 7 zeigt einen Leitsignalgenerator (10) für einen 3Kreis-4Quadrantensteller. Je Kreis sind 2 Modulatoren (9) und 2 Impulsgeneratoren (8) vorgesehen, die mit A, B bzw. A1, B1 bzw. A2, B2 gekennzeichnet sind. Die Gleichphasigkeit der Grundschwingung der Modulatoren (9) kann über Initialwinkellagesignale ($\Phi_A$, $\Phi'_A$; $\Phi_B$, $\Phi'_B$; $\Phi_C$, $\Phi'_C$) einzeln programmiert werden. Das Gleiche gilt für die gegenseitige Pulsmusterverschiebung in den Impulsgeneratoren (8) zwischen den doppeltgespeisten Kreisen mittels einzeln programmierter Initialwerte der Impulsmusterwinkellage ($\varepsilon_a$, $\varepsilon'_a$; $\varepsilon_b$, $\varepsilon'_b$; $\varepsilon_c$, $\varepsilon'_c$). Je 2 Modulatoren (9) erhalten von Reglern (12) Modulationstiefeparameter ($m0_a$) bzw. ($m0_b$) bzw. ($m0_c$) vorgegeben. Die Regler (12) liefern den Modulatoren (9) und den Impulsgeneratoren (8) je Kreis auch ein Regler-Korrekturwinkelsignal ($\psi_a$) bzw. ($\psi_b$) bzw. ($\psi_c$). Gemeinsame Synchronisation auf einen Bezugspunkt kann eingeschaltet oder ausgeschaltet werden. Auch die Kreisfrequenz ($\omega$) kann vom Setzer (5) gesetzt werden. Die Reglerausgangsgrössen könnten auch zu einer vektoriellen Grösse zusammengefasst werden.

Im Setzer (5) werden die Initialwinkellagesignale ($\Phi_A$, $\Phi'_A$; $\Phi_B$, $\Phi'_B$; $\Phi_C$, $\Phi'_C$) gemäss folgenden Gleichungen berechnet, unter Zugrundelegung eines Initialwinkels von z. B. $\Phi_0 = 0$ und einer Winkeldrehung von $\Delta\Phi = 2 \cdot \pi/A\Phi$:

$\Phi_i = \Phi_0 + \Delta\Phi \cdot (i - 1)$,    $\Phi'_i \cdot DS = \Phi_i + \pi$,

$1 \leqq i \leqq A\Phi$.

Daraus ergeben sich die Modulationsfunktionen $m_a(t)$, $m_b(t)$, $m_c(t)$ am Ausgang des Modulators (9), indem man in der Gleichung für $m_i(t)$ i durch a bzw. b bzw. c ersetzt. Der Übersichtlichkeit halber ist nur die Modulationsfunktion $m_a(t)$ eingezeichnet. Die ebenfalls nicht eingezeichneten Modulationsfunktionen $m_a'(t)$, $m_b'(t)$, $m_c'(t)$ für die Zwillingsketten ergeben sich aus den Modulationsfunktionen $m_a(t)$, $m_b(t)$, $m_c(t)$ indem man in deren Gleichungen $\Phi_i$ durch $\Phi'_i$ ersetzt.

Initialwerte für die Impulsmusterverschiebung sind:

$\Delta\varepsilon = 2 \cdot \pi/((DS + 1) \cdot k \cdot A\varepsilon)$ und

$\varepsilon_0 = \pi/(k \cdot (DS + 1))$ für

$(k + PZ - 1)/(4 - 2 \cdot DS) - \text{ent}\{(k + PZ - 1)/(4 - 2 \cdot DS)\} = 0$, andernfalls ist $\varepsilon_0 = 0$. Dabei bedeutet ent(x) die grösste ganze Zahl $\leq$ x. $\varepsilon_0$ gibt den Synchronisationswert der Impulsmusterwinkellage an.

Mit diesen Werten erhält man vom Setzer (5) die Initialwerte der Impulsmusterwinkellage ($\varepsilon_a$, $\varepsilon'_a$; $\varepsilon_b$, $\varepsilon'_b$; $\varepsilon_c$, $\varepsilon'_c$) gemäss folgenden Gleichungen:

$\varepsilon_j = \varepsilon_0 + \Delta\varepsilon \cdot (j - 1)$,

$\varepsilon'_j \cdot DS = \varepsilon_j + (PZ - 2) \cdot \pi/k + (1 - AC) \cdot \pi/k$,

$1 \leqq i \leqq A\Phi$.

Die mit einem Apostroph (') gekennzeichneten Signale gelten für Ventilketten, die als Doppelspeiseketten (DS = 1) eine fest definierbare Phase und Impulsmusterlage zu einer Zwillingskette ohne Apostroph haben.

Damit berechnet man im Impulsgenerator (8) die Mehrniveaufunktionen $KF_{aj}$, $KF_{bj}$, $KF_{cj}$ indem man in der Gleichung für $KF_{ij}$ i durch a bzw. b bzw. c ersetzt. Die Mehrniveaufunktionen $KF'_{aj}$, $KF'_{bj}$, $KF'_{cj}$ für die Zwillingsketten ergeben sich aus den Mehrniveaufunktionen $KF_{aj}$, $KF_{bj}$, $KF_{cj}$ indem man in deren Gleichungen $m_a(t)$,

$m_b(t)$, $m_c(t)$ durch $m_a'(t)$ bzw. $m_b'(t)$ bzw. $m_c'(t)$ und $\varepsilon_j$ durch $\varepsilon_j'$ ersetzt.

Bezeichnet man das Bezugspotential der Nullklemme (U0) mit LU0, so gilt: LU0 = 0,5 + ent((PZ - 2)/2).

Die Anzahl N der Thyristoren über der Nullklemme (U0) ist N = PZ/2 für PZ/2 - ent(PZ/2) = 0; andernfalls ist N = PZ/2 + 0,5. Die Anzahl M der Thyristoren unter der Nullklemme (U0) ist M = PZ - N.

Damit berechnet man die Leitsignale (11) bzw. $(LTON_i - LTUM_i)$ für die Thyristoren (TON - TUM) bezüglich der Phase i mit einem Impulsmuster j gemäss folgenden Gleichungen: $LTON_{ij} = H(KF_{ij}(t) - LU0 - N + 1)$,

.
.
.

$LTO2_{ij} = H(KF_{ij}(t) - LU0 - 1)$,

$LTO1_{ij} = H(KF_{ij}(t) - LU0)$,

$LTU1_{ij} = H(-KF_{ij}(t) + LU0)$,

$LTU2_{ij} = (-KF_{ij}(t) + LU0 - 1)$,

.
.
.

$LTUM_{ij} = H(-KF_{ij}(t) + LU0 - M + 1)$.

Dabei ist H(x) die sog. Heaviside-Funktion, für die gilt:

H(x) = 1 für x $\geqq$ 0 und H(x) = 0 für x < 0.

Für die oberen Thyristoren (TO1 - TON) der i. Phase bzw. Ventilkette gilt somit für die Leitsignale (11) bzw. $(LTOn_{ij})$, von der Nullklemme (U0) beginnend,:

$LTOn_{ij} = H(KF_{ij}(t) - LU0 - n + 1)$, $1 \leqq n \leqq N$. Entsprechendes gilt für die Leitsignale (11) bzw. $(LTUn_{ij})$ der unteren Thyristoren (TU1 - TUM), von der Nullklemme (U0) beginnend:

$LTUn_{ij} = H(-KF_{ij}(t) + LU0 - n + 1)$, $1 \leqq n \leqq M$.

Fig. 8 zeigt ein Hilfspannungsnetz des Taktungsalgorithmus bzw. der Kommutierungsfunktion $KF_{ij}(t)$. Bei jedem Schnittpunkt der Modulationsfunktion ($m_i(t)$) mit Spannungs-Niveaulinien (L0 - L5), die den Spannungen an den Ventilklemmen (UM - ON) entsprechen, wird die Kommutierungsfunktion $KF_{ij}(t)$, die den Schaltzustand einer Ventilkette eindeutig beschreibt, um den Wert 1 herauf- oder herabgesetzt. Die Änderung entspricht der Ableitung der Modulationsfunktion ($m_i(t)$). Das Hilfspannungsnetz erklärt das Entstehen der Mehrniveau-Kommutierungsfunktion $KF_{ij}$ aus den Schnittpunkten des Netzes mit der Modulationsfunktion $m_i(t)$.

Nachstehend werden einige Ausführungsbeispiele angegeben, in denen auf die Bezeichnungen in Fig. 2 mit zugehöriger Beschreibung Bezug genommen ist. Die Kennzeichen für die Phasen (R, S, T) werden auch durch die Laufvariable i verallgemeinert, wobei i = 1 einer einzigen Phase oder der Phase (R) entspricht usw.

Eine Stromrichtermatrix aus 6 4stufigen 2Quadrantenstellern mit Stromumkehr kann betrieben werden als:

- 6 2Quadrantensteller (Stromsteller, Spannungssteller),
- 3 4Quadrantensteller mit PZ = 2 oder 3 oder 4,
- 2 1pulsige 3Phasen-Wechselrichter mit PZ = 2 oder 3 oder 4,
- 1 2pulsiger 3Phasen-Wechselrichter mit PZ = 2 oder 3 oder 4 oder
- eine Mischung von diesen Schaltungen.

Beispiel 1:

Taktungsalgorithmus für einen Matrixstromrichter mit 6 2Quadrantenstellern, Pz = 2 (Strom- oder Spannungssteller):

Setzerinhalt: AG = 3, AC = 0, PZ = 2, DS = 1,

$\omega = 2 \cdot \pi \cdot f$, f = 16 2/3 Hz, k = 12, $\Omega = k \cdot \omega$, $A\Phi = 1$, $A\varepsilon = 3$.

Individuelle Eingangssignale des Modulators (9):

$m0_i = 0{,}75$, $\psi_i = \pi/4$, $\Phi_0 = 0$, $\Phi_A$, $\Phi_A'$; $\Phi_B$, $\Phi_B'$; $\Phi_C$, $\Phi_C'$.

Individuelle Eingangssignale des Impulsgenerators (8):

$\varepsilon_a$, $\varepsilon_a'$; $\varepsilon_b$, $\varepsilon_b'$; $\varepsilon_c$, $\varepsilon_c'$; n1 = 20; $m_a(t)$, $m_a'(t)$; $m_b(t)$, $m_b'(t)$; $m_c(t)$, $m_c'(t)$.

Leitsignale (11): $LTO1_{ij}$, $LTU1_{ij}$.

Beispiel 2:

Taktungsalgorithmus für einen Matrixstromrichter mit 3 4Quadrantenstellern, PZ =2:

Setzerinhalt: AG = 3, AC = 1, PZ = 2, DS = 1,

$\omega = 2 \cdot \pi \cdot f$, f = 16 2/3 Hz, k = 11, $\Omega = k \cdot \omega$, $A\Phi = 1$, $A\varepsilon = 3$.

Individuelle Eingangssignale des Modulators (9), des Impulsgenerators (8) sowie Leitsignale (11) entsprechen dem Beispiel 1. Das Gleiche gilt auch für das nächste Beispiel.

Beispiel 3:

Taktungsalgorithmus für einen Matrixstromrichter mit 2 1pulsigen 3Phasen-Wechselrichtern, PZ =2: Setzerinhalt: AG = 2, AC = 1, PZ = 2, DS = 0,
$\omega = 2 \cdot \pi \cdot f$, f = 16 2/3 Hz, k = 11, $\Omega = k \cdot \omega$, A$\Phi$ = 3, A$\varepsilon$ = 1.

Die Erfindung eignet sich besonders gut für Mehrsystemlokomotiven. Die mit einer minimalen Anzahl von Schaltern ausgeführte Starkstromschaltung einer Lokomotive wird durch eine einfache Umprogrammierung des Modulators (9) an das andere Speisungssystem umgestellt. Die Mehrsystemfähigkeit der Lokomotive wird mit nur einer Leitelektronik sichergestellt. Die Universalität des verwendeten Algorithmus ermöglicht bei der Abwicklung von Standardprojekten eine Aufwand- und Kostenreduktion.

Das Ausgangssignal $m_i(t)$ des Modulators (9) stellt eine zeitabhängige Grösse dar, die ähnlich wie die Steuerspannung bei der herkömmlichen Leittechnik interpretiert werden kann. Diese Funktion $m_i(t)$ kann auch, wie bisher, als ein Teil des Reglers (12) realisiert werden, welcher zeitabhängige Grössen zu liefern hat. Die Schnittstelle zwischen dem Regler (12) und dem Modulator (9) ist dann unübersichtlicher.

Die wichtigste Neuerung befindet sich im Impulsgenerator (8), dem die Modulationsfunktion ($m_i(t)$) zugeführt wird.

Im Unterschied zur vorliegenden Erfindung wird bei herkömmlichen Impulsgeneratoren eine sägezahnförmige Hilfsspannung mit einer sinusförmigen Steuerspannung geschnitten, wobei die Schnittstellen die Leitsignale für die Thyristoren ergeben. Bei dem beschriebenen Impulsgenerator (8) muss man dagegen in analoger Weise von Schnittpunkten der Steuerspannung mit dem Hilfsnetz (Fig. 8) sprechen.

Für spezielle Aussteuerungen können spezielle Modulationsfunktionen ($m_i(t)$) verwendet werden.

Für eine rechteckförmige Aussteuerung mit beliebiger Impulsbreite gilt:

$$m_i(t) = m0_i + (2/\pi) \cdot \sum_{n=1}^{n2} [\sin (n \cdot m0_i \cdot \pi) \cdot \cos (n \cdot (\omega \cdot t - \Phi_i - \Psi_i))]/n,$$

wobei n eine Laufvariable und n2 eine Genauigkeitskennzahl bedeuten.

Für den Sonderfall einer rechteckförmigen Aussteuerung mit 180° Impulsbreite gilt:
$m_i(t) = m0_i$ für $\cos (\omega \cdot t - \Phi_i) \geqq 0$,
andernfalls ist $m_i(t) = 0$.

Für eine dreieckförmige Aussteuerung gilt:

$$m_i(t) = m0_i \cdot \{0,5 + (4/\pi^2) \cdot \sum_{n=1}^{n2} [\cos ((2 \cdot n - 1) \cdot (\omega \cdot t - \Phi_i - \Psi_i))]/(2 \cdot n - 1)^2\}.$$

Für eine trapezförmige Aussteuerung gilt:

$$m_i(t) = 0,5 + (4 \cdot m0_i/(\pi \cdot \alpha)) \cdot \sum_{n=1}^{n2} [\sin (2 \cdot n - 1) \cdot \alpha/(2 \cdot n - 1)^2] \cdot \sin ((2 \cdot n - 1) \cdot (\omega \cdot t - \Phi_i - \Psi_i)),$$

wobei $\alpha$ die halbe Differenz zwischen den Längen der grossen und kleinen Parallelseite des Trapezes bedeutet. Die Genauigkeitskennzahl n2 liegt vorzugsweise im Zahlenbereich zwischen 20 und 100.

**Patentansprüche**

1. Verfahren zur Steuerung elektrischer Ventile eines Stromrichters (2),

   a) der je Wechselstromphase (R, S, T; a, b, c, ...) wenigstens ein Ventil (TON - TUM) oder eine Ventilkette (13, 14) aufweist,

   b) wobei die Ventile oder Ventilketten jeder Wechselstromphase mit einer gegenseitigen Phasenver- schiebung ($\Phi_i$) angesteuert werden,

   dadurch gekennzeichnet,

   c) die Steuerung der Ventile in Abhängigkeit von einer Kommutierungsfunktion $KF_{ij}(t)$ erfolgt, mit:

$$KF_{ij}(t) = m_i(t) + (2/\pi) \cdot \sum_{n=1}^{n1} \{\sin (n \cdot \pi \cdot m_i(t)) \cdot$$

$$\cos (n \cdot k \cdot (\omega \cdot t - (\epsilon_j + \Phi_i + \psi_i)))\}/n,$$

   t = Zeit, $m_i(t)$ = Modulationsfunktion,
   n = Laufvariable mit $1 \leqq n \leqq n1$,
   n1 = Genauigkeitskennzahl, i = Laufvariable zur Kennzeichnung der Wechselstromphase (R, S, T; a, b, c ...) mit $1 \leqq i \leqq - A\Phi \cdot AG$, $A\Phi$ = Anzahl Ventilketten mit Grundschwingungsverschiebung, AG = Anzahl Ventilketten (13, 14) mit gleicher Grundschwingungsphase, j = Laufvariable zur Bezeichnung eines Im- pulsmusters mit $1 \leqq j \leqq A\epsilon \cdot A\Phi$, $A\epsilon$ = Anzahl unabhängiger, impulsmusterverschobener Ventilketten, k = Vielfachheit der Taktung, $\omega$ = Kreisfrequenz der Wechselspannung, $\Phi_i$ = vorgebbarer Phasenwinkel, $\psi_i$ = Regler-Korrekturwinkel und $\epsilon_j$ = Initialwert der j. Impulsmusterlage von Ventilkettenschaltungen (13, 14) mit gleichem Index i.

2. Verfahren nach Anspruch 1, dadurch gekennzeichnet, dass die Modulationsfunktion ($m_i(t)$) gemäss:

   $$m_i(t) = (PZ - 1) \cdot \{AC + m0_i \cdot \cos (AC \cdot (\omega \cdot t - (\phi_i + \psi_i)))\}/(AC + 1)$$

   gebildet ist, wobei t die Zeit, der Index i eine Laufvariable zur Kennzeichnung der Wechselstromphase (R, S, T; a, b, c ...), PZ die Anzahl steuerbarer Ventile einer Ventilkette, AC einen Betriebsstromparameter mit der Bedeutung: AC = 1 für wechselstrom/Wechselspannungsbetrieb, AC = 0 für Gleichstrom/Gleich- spannungsbetrieb, $m0_i$ einen vorgebbaren Parameter der Modulationstiefe, $\omega$ die Kreisfrequenz der Wechselspannung, $\psi_i$ einen vorgebbaren Phasenwinkel bzw. Regler-Korrekturwinkel und $\Phi_i$ die Initial- winkellage einer i. Wechselstromphase bezeichnen.

3. Verfahren nach Anspruch 1, dadurch gekennzeichnet, dass die Modulationsfunktion ($m_i(t)$) gemäss:

   a)

$$m_i(t) = m0_i + (2/\pi) \cdot \sum_{n=1}^{n2} [\sin (n \cdot m0_i \cdot \pi) \cdot$$

$$\cos (n \cdot (\omega \cdot t - \Phi_i - \psi_i))]/n$$

   oder b)
   $m_i(t) = m0_i$ für $\cos (\omega \cdot t - \psi_i) \geqq 0$, sonst $m_i(t) = 0$ oder c)

$$m_i(t) = m0_i \cdot \{0,5 + (4/\pi^2) \cdot \sum_{n=1}^{n2} [\cos ((2 \cdot n - 1) \cdot$$

$$(\omega \cdot t - \Phi_i - \psi_i))]/(2 \cdot n - 1)^2\}$$

   oder d) für trapezförmige Modulation

$$m_i(t) = 0,5 + (4 \cdot m0_i/(\pi \cdot \alpha)) \cdot \sum_{n=1}^{n2} [\sin(2 \cdot n - 1) \cdot$$

$$\alpha/(2 \cdot n - 1)^2] \cdot \sin((2 \cdot n - 1) \cdot (\omega \cdot t - \Phi_i - \psi_i))$$

gebildet ist, wobei t die Zeit, der Index i eine Laufvariable zur Kennzeichnung der Wechselstromphase (R, S, T; a, b, c ...), $m0_i$ einen Parameter der Modulationstiefe, n2 eine Genauigkeitskennzahl, $\omega$ die Kreisfrequenz der Wechselspannung, $\Phi_i$ einen vorgebbaren Phasenwinkel, $\psi_i$ einen Regler-Korrekturwinkel und $\alpha$ die halbe Differenz zwischen der grossen und kleinen Parallelseite eines Trapezes bezeichnen.

4. Verfahren nach einem der Ansprüche 1 bis 3, dadurch gekennzeichnet,
    a) dass die Kommutierungsfunktion $KF_{ij}(t)$ für jede Ventilkette (13, 14) eines Stromrichters (2) mit mehreren Ventilketten separat in einem gleich ausgeführten Impulsgenerator (8) gebildet wird und
    b) dass die Parameter der Kommutierungsfunktion $KF_{ij}(t)$ von einem übergeordneten Setzer (5) initialisiert werden.

5. Verfahren nach einem der Ansprüche 1 bis 4, dadurch gekennzeichnet,
    a) dass die Modulationsfunktion ($m_i(t)$) für jede Ventilkette eines Stromrichters (2) mit mehreren Ventilketten separat in einem gleich ausgeführten Modulator (9) gebildet wird und
    b) dass die Parameter der Modulationsfunktion ($m_i(t)$) von einem übergeordneten Setzer (5) initialisiert werden.

6. Verfahren nach einem der Ansprüche 1 bis 5, dadurch gekennzeichnet, dass in Abhängigkeit von der Kommutierungsfunktion $KF_{ij}(t)$ Leitsignale (11, $LTOn_i$, $LTUn_i$) für steuerbare Ventile (TON - TUM) gebildet werden gemäss:
    $LTOn_{ij} = H(KF_{ij}(t) - LU0 - n + 1)$, $1 \leqq n \leqq N$
    für steuerbare Ventile (TO1 - TON) zwischen einer Nullklemme (U0) und einer positiven Stromschiene (SO), beginnend von der Nullklemme, und gemäss:
    $LTUn_{ij} = H(-KF_{ij}(t) + LU0 - n + 1)$, $1 \leqq n \leqq M$ für steuerbare Ventile (TU1 - TUM) zwischen der Nullklemme (U0) und einer negativen Stromschiene (SU), beginnend von der Nullklemme, wobei i eine Laufvariable zur Kennzeichnung der Wechselstromphase (R, S, T; a, b, c ...), j eine Laufvariable zur Kennzeichnung des Impulsmusters, H(x) die Heaviside-Funktion und LU0 = 0,5 + ent ((PZ - 2)/2)
    das Bezugspotential der Nullklemme (U0) bezeichnen, PZ = N + M = Anzahl steuerbarer Ventile einer Ventilkette (13, 14).

7. Verfahren nach einem der Ansprüche 1 bis 6, dadurch gekennzeichnet,
    a) dass der mindestens eine Modulator (9)
    b) und/oder der mindestens eine Impulsgenerator (8) in Abhängigkeit von mindestens einem Ausgangssignal (S12; SYN, $\psi_i$; SYN, $\psi_a$, $\psi_b$, $\psi_c$) eines vorgeschalteten Reglers (12) gesteuert werden.

8. Verfahren nach einem der Ansprüche 4 bis 7, dadurch gekennzeichnet, dass im Setzer (5) gespeicherte und/oder gebildete Daten bzw. Parameter (AC, PZ, $\omega$, k, $\Phi_R$, $\Phi_S$, $\Phi_T$; $\Phi_A$ - $\Phi'_C$; $\varepsilon_R$, $\varepsilon_S$, $\varepsilon_T$; $\varepsilon_a$ - $\varepsilon'_c$) periodisch an den mindestens einen Modulator (9) und an den mindestens einen Impulsgenerator (8) geliefert werden.

9. Verfahren nach einem der Ansprüche 1 bis 8, dadurch gekennzeichnet,
    dass die gegenseitige Phasenverschiebung der Wechselstromphasen (R, S, T; a, b, c, ...) bzw. die Initialwinkellagesignale ($\Phi_i$; $\Phi_R$, $\Phi_S$, $\Phi_T$; $\Phi_A$, $\Phi'_A$; $\Phi_B$, $\Phi'_B$; $\Phi_C$, $\Phi'_C$) gemäss folgenden Gleichungen berechnet werden, unter Zugrundelegung eines Initialwinkels $\Phi_0$ und einer Winkeldifferenz $\Delta\Phi = 2 \cdot \pi/A\Phi$:
    $\Phi_i = \Phi_0 + \Phi \cdot (i - 1)$,         $\Phi'_i \cdot DS = \Phi_i + \pi$,
    $1 \leqq i \leqq A\Phi$, $A\Phi$ = Anzahl Ventilketten mit Grundschwingungsverschiebung,
    und/oder
    dass die Initialwerte der Impulsmusterwinkellage ($\varepsilon_j$; $\varepsilon_R$, $\varepsilon_S$, $\varepsilon_T$; $\varepsilon_a$, $\varepsilon'_a$; $\varepsilon_b$, $\varepsilon'_b$; $\varepsilon_c$, $\varepsilon'_c$) gemäss folgenden Gleichungen gebildet werden:
    $\varepsilon_j = \varepsilon_0 + \Delta\varepsilon \cdot (j - 1)$,
    $\varepsilon'_j \cdot DS = \varepsilon_j + (PZ - 2) \cdot \pi/k + (1 - AC) \cdot \pi/k$, mit:
    $1 \leqq j \leqq A\varepsilon$, $A\varepsilon$ = Anzahl unabhängiger impulsmusterverschobener Ventilketten,

$\Delta\varepsilon = 2 \cdot \pi/((DS + 1) \cdot k \cdot A\varepsilon)$ und

$\varepsilon_0 = \pi/(k \cdot (DS + 1))$ für

$(k + PZ - 1)/(4 - 2 \cdot DS) -$

ent $\{(k + PZ - 1)/(4 - 2 \cdot DS)\} = 0$, sonst ist $\varepsilon_0 = 0$,

ent $(x)$ = grösste ganze Zahl $\leq x$, DS = 1 für doppelseitige Speisung, sonst ist DS = 0, PZ = Anzahl steuerbarer Ventile (TON - TUM) je Ventilkette (13, 14).

10. Verfahren nach einem der Ansprüche 1 bis 9, dadurch gekennzeichnet,

a) dass der Initialwert der Impulsmusterwinkellage $(\varepsilon_i; \varepsilon_R, \varepsilon_S, \varepsilon_T; \varepsilon_a, \varepsilon'_a; \varepsilon_b, \varepsilon'_b; \varepsilon_c, \varepsilon'_c) = 0$ ist

b) und/oder dass die Anzahl (PZ) steuerbarer Ventile einer Ventilkette des Stromrichters (2) = 1 ist.

## Claims

1. Method for controlling electric valves of a converter (2)

a) which has at least one valve (TON - TUM) or one valve chain (13, 14) per AC phase (R, S, T; a, b, C, ...),

b) the valves or valve chains of each AC phase being driven with a mutual phase shift ($\Phi_i$),

characterized in that

c) the control of the valves takes place depending on a commutation function $KF_{ij}(t)$, where:

$$KF_{ij}(t) = m_i(t) + (2/\pi) \cdot \sum_{n=1}^{n1} \{\sin(n \cdot \pi \cdot m_i(t)) \cdot \cos(n \cdot k \cdot (\omega \cdot t - (\epsilon_j + \Phi_i + \psi_i)))\}/n,$$

$t$ = time, $m_i(t)$ = modulation function,

$n$ = control variable with $1 \leq n \leq n1$,

$n1$ = accuracy characteristic, $i$ = control variable for characterizing the AC phase (R, S, T; a, b, c ...) with $1 \leq i \leq A\Phi \cdot AG$, $A\Phi$ = number of valve chains having a fundamental-wave shift, AG = number of valve chains (13, 14) having the same fundamental-wave phase, $j$ = control variable for denoting a pulse pattern with $1 \leq j \leq A\varepsilon \cdot A\Phi$, $A\varepsilon$= number of independent valve chains with shifted pulse pattern, $k$ = multiplicity of the timing, $\omega$ = angular frequency of the AC voltage, $\Phi_i$ = prescribable phase angle, $\psi_i$ = controller correction angle, and $\varepsilon_j$ = initial value of the j-th pulse pattern position of valve chain circuits (13, 14) having the same index i.

2. Method according to Claim 1, characterized in that the modulation function ($m_i(t)$) is formed in accordance with:

$$m_i(t) = (PZ - 1) \cdot \{AC + mO_i \cdot \cos(AC \cdot (\omega \cdot t - (\Phi_i + \psi_i)))\}/(AC + 1)$$

$t$ denoting the time, the index i a control variable for characterizing the AC phase (R, S, T; a, b, c ...), PZ the number of controllable valves of a valve chain, AC an operating current parameter with the significance: AC = 1 for AC/AC voltage operation, AC = 0 for DC/DC voltage operation, $mO_i$ a prescribable parameter of the modulation depth, $\omega$ the angular frequency of the AC voltage, $\psi_i$ a prescribable phase angle or controller correction angle, and $\Phi_i$ the initial angular position of a i-th AC phase.

3. Method according to Claim 1, characterized in that the modulation function ($m_i(t)$) is formed in accordance with:

a)

$$m_i(t) = mO_i + (2/\pi) \cdot \sum_{n=1}^{n2} [\sin(n \cdot mO_i \cdot \pi) \cdot \cos(n \cdot (\omega \cdot t - \Phi_i - \psi_i))]/n,$$

or b)

$m_i(t) = mO_i$ for cos $(\omega \cdot t - \psi_i) \geqq 0$, otherwise

$m_i(t) = 0$

or c)

$$m_i(t) = mO_i \cdot \{0.5 + (4/\pi^2) \cdot \sum_{n=1}^{n2} [\cos ((2 \cdot n - 1) \cdot (\omega \cdot t - \Phi_i - \psi_i))]/(2 \cdot n - 1)^2\}$$

or d) for trapezoidal modulation

$$m_i(t) = 0.5 + (4 \cdot mO_i/(\pi \cdot \alpha)) \cdot \sum_{n=1}^{n2} [\sin (2 \cdot n - 1) \cdot \alpha/(2 \cdot n - 1)^2] \cdot \sin ((2 \cdot n - 1) \cdot (\omega \cdot t - \Phi_i - \psi_i))$$

t denoting the time, the index i a control variable for characterizing the AC phase (R, S, T; a, b, c, ...), $mO_i$ a parameter of the modulation depth, n2 an accuracy characteristic, $\omega$ the circuit frequency of the AC voltage, $\Phi_i$ a prescribable phase angle, $\psi_i$ a controller correction angle and $\alpha$ half the difference between the largest and smallest parallel side of a trapeze.

4. Method according to one of Claims 1 to 3, characterized in that
   a) the commutation function $KF_{ij}(t)$ is formed separately in an identically designed pulse generator (8) for each valve chain (13, 14) of a converter (2) having a plurality of valve chains, and
   b) the parameters of the commutation function $KF_{ij}(t)$ are initialized by a higher-order setter (5).

5. Method according to one of Claims 1 to 4, characterized in that
   a) the modulation function $(m_i(t))$ is formed separately in an identically designed modulator (9) for each valve chain of a converter (2) having a plurality of valve chains, and
   b) the parameters of the modulation function $(m_i(t))$ are initialized by a higher-order setter (5).

6. Method according to one of Claims 1 to 5, characterized in that depending on the commutation function $KF_{ij}(t)$ pilot signals (11, $LTOn_i$, $LTUn_i$) are formed for controllable valves (TON - TUM) in accordance with:
   $LTOn_{ij} = H(KF_{ij}(t) - LU0 - n + 1)$, $1 \leqq n \leqq N$
   for controllable valves (TO1 - TON) between a zero terminal (U0) and a positive busbar (SO), starting from the zero terminal, and in accordance with:
   $LTUn_{ij} = H(-KF_{ij}(t) + LU0 - n + 1)$, $1 \leqq n \leqq M$
   for controllable valves (TU1 - TUM) between the zero terminal (U0) and a negative busbar (SU), starting from the zero terminal, i denoting a control variable for characterizing the AC phase (R, S, T; a, b, c ...), j a control variable for characterizing the pulse pattern, H(x) the Heaviside function, and
   $LU0 = 0.5 + ent (PZ - 2)/2)$
   the reference potential of the zero terminal (U0), PZ = N + M = number of controllable valves of a valve chain (13, 14).

7. Method according to one of Claims 1 to 6, characterized in that
   a) the at least one modulator (9)
   b) and/or the at least one pulse generator (8) are controlled as a function of at least one output signal (S12; SYN, $\psi_i$; SYN, $\psi_a$, $\psi_b$, $\psi_c$) of an upstream controller (12).

8. Method according to one of Claims 4 to 7, characterized in that data or parameters (AC, PZ, W, k, $\Phi_R$, $\Phi_S$, $\Phi_T$; $\Phi_A - \Phi'_C$; $\varepsilon_R$, $\varepsilon_S$, $\varepsilon_T$; $\varepsilon_a - \varepsilon'_c$) stored and/or formed in the setter (5) are delivered periodically to the at least one modulator (9) and to the at least one pulse generator (8).

9. Method according to one of Claims 1 to 8, characterized in that

the mutual phase shift of the AC phases (R, S, T; a, b, c, ...) or the initial angular position signals ($\Phi_i$; $\Phi_R$, $\Phi_S$, $\Phi_T$; $\Phi_A$, $\Phi'_A$; $\Phi_B$, $\Phi'_B$; $\Phi_C$, $\Phi'_C$) are calculated in accordance with the following equations on the basis of an initial angle $\Phi_0$ and an angular difference $\Delta\Phi = 2 \cdot \pi/A\Phi$:

$\Phi_i = \Phi_0 + \Delta\Phi \cdot (i - 1)$,  $\Phi'_i \cdot DS = \Phi_i + \pi$,

$1 \leqq i \leqq A\Phi$, $A\Phi$ = number of valve chains having fundamental-wave shift,

and/or

the initial values of the pulse pattern angular position ($\varepsilon_j$; $\varepsilon_R$, $\varepsilon_S$, $\varepsilon_T$; $\varepsilon_a$, $\varepsilon'_a$; $\varepsilon_b$, $\varepsilon'_b$; $\varepsilon_c$, $\varepsilon'_c$) are formed in accordance with the following equations:

$\varepsilon_j = \varepsilon_0 + \Delta\varepsilon \cdot (j - 1)$,

$\varepsilon'_j \cdot DS = \varepsilon_j + (PZ - 2) \cdot \pi/k + (1 - AC) \cdot \pi/k$,

where:

$1 \leqq j \leqq A\varepsilon$, $A\varepsilon$ = number of independent valve chains with shifted pulse pattern,

$\Delta\varepsilon = 2 \cdot \pi/((DS + 1) \cdot k \cdot A\varepsilon)$ and

$\varepsilon_0 = \pi/(k \cdot (DS + 1))$ for

$(k + PZ - 1)/(4 - 2 \cdot DS) -$

$\text{ent}\{(k + PZ - 1)/(4 - 2 \cdot DS)\} = 0$, otherwise $\varepsilon_0 = 0$,

ent (x) = largest integer $\leqq$ x, DS = 1 for double-sided feed, otherwise DS = 0, PZ = number of controllable valves (TON - TUM) per valve chain (13, 14).

10. Method according to one of Claims 1 to 9, characterized in that

    a) the initial value of the pulse pattern angular position is ($\varepsilon_j$; $\varepsilon_R$, $\varepsilon_S$, $\varepsilon_T$; $\varepsilon_a$, $\varepsilon'_a$; $\varepsilon_b$, $\varepsilon'_b$; $\varepsilon_c$, $\varepsilon'_c$) = 0,

    b) and/or the number (PZ) of controllable valves of a valve chain of the converter (2) = 1.


**Revendications**

1. Procédé pour la commande de soupapes électriques d'un convertisseur (2),

    a) qui présente pour chaque phase de courant alternatif (R, S, T; a, b, c,...) au moins une soupape (TON - TUM) ou une chaîne de soupapes (13, 14),

    b) les soupapes ou les chaînes de soupapes de chaque phase de courant alternatif étant amorcées avec un décalage de phase réciproque ($\Phi_i$),

        caractérisé par le fait que,

    c) la commande des soupapes se fait selon une fonction de commutation $KF_{ij}(t)$, avec:

$$KF_{ij}(t) = m_i(t) + (2/\pi) \cdot \sum_{n=1}^{n1} \{\sin(n \cdot \pi \cdot m_i(t)) \cdot$$

$$\cos(n \cdot k \cdot (\omega \cdot t - (e_j + \Phi_i + \psi_i)))\}/n,$$

t = temps, $m_i(t)$ = fonction de modulation,

n = variable d'écoulement avec $1 \leqq n \leqq n1$,

n1 = chiffre caractéristique de précision, i = variable d'écoulement pour le repérage de la phase de courant alternatif (R, S, T; a, b, c...) avec $1 \leqq i \leqq A\Phi \cdot AG$, $A\Phi$ = nombre de chaînes de soupapes avec décalage des oscillations de base, AG = nombre de chaînes de soupapes (13, 14) avec la même phase d'oscillations de base, j = variable d'écoulement pour la désignation d'un type d'impulsion avec $1 \leqq j \leqq A\varepsilon \cdot A\Phi$,

$A\varepsilon$ = nombre des chaînes de soupapes indépendantes, à type d'impulsion décalé, k = multiplicabilité du cyclage,

$\omega$ = fréquence du circuit de la tension alternative,

$\Phi_i$ = angle de phase prédéterminable, $\psi_i$ = angle de correction du régulateur et $\varepsilon_j$ = valeur initiale de la position j du type d'impulsion des câblages de chaînes de soupapes (13, 14) avec le même indice i.

2. Procédé selon la revendication 1, caractérisé par le fait que la fonction de modulation ($m_i(t)$) est formée conformément à:

$$m_i(t) = (PZ - 1) \cdot \{AC + mO_i \cdot \cos(AC(\omega \cdot t - (\Phi_i + \psi_i)))\}/(AC + 1),$$

    t étant le temps, l'indice i une variable d'écoulement pour le repérage des phases du courant alternatif (R, S, T; a, b, c...), PZ le nombre de soupapes d'une chaîne de soupapes pouvant être commandées, AC: un paramètre du courant de fonctionnement avec, pour signification: AC = 1 pour la marche en courant alternatif/tension alternative, AC = 0 pour la marche en courant continu/tension continue, $m0_i$ un paramètre donné à l'avance de la profondeur de modulation, $\omega$ la fréquence du circuit de la tension alternative, $\psi_i$ un angle de phase donné à l'avance ou un angle de correction du régulateur et $\Phi_i$ la position angulaire initiale d'une phase i de courant alternatif.

3. Procédé selon la revendication 1, caractérisé par le fait que la fonction de modulation ($m_i(t)$) est formée selon:

a)

$$m_i(t) \;=\; m0_i \;+\; (2/\pi) \;\cdot\; \sum_{n=1}^{n2} [\sin\,(n\,\cdot\,m0_i\,\cdot\,\pi)\;\cdot\; \cos\,(n\,\cdot\,(\omega\,\cdot\,t\,-\,\Phi_i\,-\,\psi_i))]/n$$

ou b)
$m_i(t) = m0_i$ pour $\cos(\omega \cdot t - \psi_i) \geqq 0$, sinon $m_i(t) = 0$
ou c)

$$m_i(t) \;=\; m0_i \;\cdot\; \{0,5 \;+\; (4/\pi^2)\;\cdot\; \sum_{n=1}^{n2} [\cos\,((2\,\cdot\,n\,-\,1)\,\cdot\, (\omega\,\cdot\,t\,-\,\Phi i\,-\,\psi_i))]/(2\,\cdot\,n\,-\,1)^2\}$$

ou d) pour la modulation trapézoïdale

$$mi(t) \;=\; 0,5 \;+\; (4\,\cdot\,m0_i/(\pi\,\cdot\,\alpha))\;\cdot\; \sum_{n=1}^{n2} [\sin\,(2\,\cdot\,n\,-\,1)\,\cdot\, \alpha/(2\,\cdot\,n\,-\,1)^2]\;\cdot\;\sin\,((2\,\cdot\,n\,-\,1)\,\cdot\,(\omega\,\cdot\,t\,-\,\Phi_i\,-\,\psi_i))$$

t étant le temps, l'indice i une variable d'écoulement pour le repérage de la phase de courant alternatif (R, S, T; a, b, c...), $m0_i$ un paramètre de la profondeur de modulation, n2 un chiffre caractéristique de précision,
$\omega$ la fréquence du circuit de la tension alternative, $\Phi_i$ un angle de phase donné à l'avance, $\psi_i$ un angle de correction du régulateur et $\alpha$ la demi-différence entre le petit et le grand côté parallèles d'un trapèze.

4. Procédé selon l'une quelconque des revendications 1 à 3, caractérisé par le fait,
a) que la fonction de commutation $KF_{ij}(t)$ pour chaque chaîne de soupapes (13, 14) d'un convertisseur (2) est constituée de plusieurs chaînes de soupapes séparées dans un même générateur d'impulsions réalisé de la même façon (8) et
b) que les paramètres de la fonction de commutation $KF_{ij}(t)$ sont initialisés par un compositeur prioritaire (5).

5. Procédé selon l'une quelconque des revendications 1 à 4, caractérisé par le fait,
a) que la fonction de modulation ($m_i(t)$, pour chaque chaîne de soupapes d'un convertisseur (2), est formée de plusieurs chaînes de soupapes séparées réalisées dans un modulateur (9) réalisé de la même façon et
b) que les paramètres de la fonction de modulation ($m_i(t)$) sont initialisés par un compositeur prioritaire (5).

6. Procédé selon l'une quelconque des revendications 1 à 5, caractérisé par le fait que selon la fonction de commutation $KF_{ij}(t)$, les signaux de conduite (11, $LTOn_i$, $LTUn_i$) pour les soupapes pouvant être commandées (TON - TUM) sont formés conformément à:
$LTOn_{ij} = H(KF_{ij}(t) - LUO - n + 1)$, $1 \leqq n \leqq N$

13

pour les soupapes pouvant être commandées (TO1 - TON) entre une borne de fil neutre (UO) et une barre conductrice positive (SO), commençant par la borne de fil neutre et conformément à:

$LTUn_{ij} = H(-KF_{ij}(t) + LUO - n + 1)$, $1 \leqq n \leqq M$

pour les soupapes pouvant être commandées (TU1 - TUM) entre la borne de fil neutre (UO et une barre conductrice négative (SU), commençant par la borne de fil neutre, i étant une variable d'écoulement pour le repérage de la phase du courant alternatif (R, S, T; a, b, c...), j une variable d'écoulement pour le repérage du type d'impulsion, H(x): la fonction de Heaviside et LUO = 0,5 + ent ((PZ - 2)/2) le potentiel de référence de la borne de fil neutre (UO), PZ = N + M = nombre de soupapes pouvant être commandées d'une chaîne de soupapes (13, 14).

7. Procédé selon l'une quelconque des revendications 1 à 6, caractérisé par le fait
    a) qu'au moins un modulateur (9)
    b) et/ou au moins un générateur d'impulsions (8) sont commandés en fonction d'au moins un signal de sortie (S12; SYN, $\psi_i$; SYN, $\psi_a$, $\psi_b$, $\psi_c$) d'un régulateur (12) branché avant.

8. Procédé selon l'une quelconque des revendications 4 à 7, caractérisé par le fait que les données ou paramètres mémorisés et/ou formés dans le compositeur (5) (AC, PZ, $\omega$, k, $\Phi_R$, $\Phi_S$, $\Phi_T$; $\Phi_A$ - $\Phi'_c$; $\varepsilon_R$, $\varepsilon_S$, $\varepsilon_T$; $\varepsilon_a$ - $\varepsilon'_c$) sont fournis périodiquement à au moins un modulateur (9) et à au moins un générateur d'impulsions (8).

9. Procédé selon l'une quelconque des revendications 1 à 8, caractérisé par le fait que le décalage réciproque de phase de courant alternatif (R, S, T; a, b, c,...) ou les signaux de position angulaire initiale ($\Phi_i$; $\Phi_R$, $\Phi_S$, $\Phi_T$; $\Phi_A$, $\Phi'_A$; $\Phi_B$, $\Phi'_B$; $\Phi_C$, $\Phi'_C$) sont calculés conformément aux équations suivantes, en se basant sur un angle initial $\Phi_0$ et une différence angulaire

$\Delta\Phi = 2 \cdot \pi/A\Phi$:

$\Phi_i = \pi_o + \Phi \cdot (i - 1)$,           $\Phi'_i \cdot DS = \Phi_i + \pi$,

$1 \leqq i \leqq A\Phi$, $A\Phi$ = nombre de chaînes de soupapes avec décalage d'oscillations de base
et/ou
que les valeurs initiales de la position angulaire du type d'impulsion ($\varepsilon_j$; $\varepsilon_R$, $\varepsilon_S$, $\varepsilon_T$; $\varepsilon_a$, $\varepsilon'_a$; $\varepsilon_b$, $\varepsilon'_b$; $\varepsilon_c$, $\varepsilon'_c$) sont formées conformément aux équations suivantes:

$\varepsilon_j = \varepsilon_o + \Delta\varepsilon \cdot (j - 1)$,
$\varepsilon'_j \cdot DS = \varepsilon_j + (PZ - 2) \cdot \pi/k + (1 - AC) \cdot \pi/k$, avec $1 \leqq j \leqq A\varepsilon$, $A\varepsilon$ = nombre de chaînes de soupapes à décalage de type d'impulsions indépendantes,
$\Delta\varepsilon = 2 \cdot \pi/((DS + 1) \cdot k \cdot A\varepsilon)$ et
$\varepsilon_o = \pi/ (k \cdot (DS + 1))$ pour
$(k + PZ - 1)/(4 - 2 \cdot DS)$ -
ent $\{(k + PZ - 1)/(4 - 2 \cdot DS)\}$ = 0 sinon $\varepsilon_o$ = 0,
ent (x) = plus grand nombre entier $\leqq$ x, DS = 1 pour l'alimentation double face, sinon DS = 0, PZ = nombre de soupapes pouvant être commandées (TON - TUM) pour chaque chaîne de soupapes (13, 14).

10. Procédé selon l'une quelconque des revendications 1 à 9, caractérisé par le fait que
    a) la valeur initiale de la position angulaire du type d'impulsion ($\varepsilon_i$; $\varepsilon_R$, $\varepsilon_S$, $\varepsilon_T$; $\varepsilon_a$, $\varepsilon'_a$, $\varepsilon_b$, $\varepsilon'_b$, $\varepsilon_c$, $\varepsilon'_c$) = 0
    b) et/ou le nombre (PZ) de soupapes pouvant être commandées d'une chaîne de soupapes du redresseur (2) = 1.

EP 0 508 110 B1

FIG.1

FIG.2

FIG.3

15

FIG.4

FIG.5

FIG.6

FIG.7

FIG.8